(19) Europäisches Patentamt
European Patent Office
Office européen des brevets

(11) EP 4 481 778 A1

(12) **EUROPEAN PATENT APPLICATION**

(43) Date of publication:
**25.12.2024 Bulletin 2024/52**

(21) Application number: **23180636.5**

(22) Date of filing: **21.06.2023**

(51) International Patent Classification (IPC):
***H01G 11/48*** *(2013.01)* ***H01G 11/86*** *(2013.01)*
***H01M 4/137*** *(2010.01)* ***H01M 4/1399*** *(2010.01)*
***H01M 4/90*** *(2006.01)* *H01G 11/44 (2013.01)*

(52) Cooperative Patent Classification (CPC):
**H01G 11/48; H01G 11/44; H01G 11/86; H01M 4/133; H01M 4/1399; H01M 4/9008; H01M 4/96;** H01M 4/137; H01M 4/1397

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ligna Energy AB**
**602 40 Norrköping (SE)**

(72) Inventors:
- **AIL, Ujwala**
  **58431 LINKÖPING (SE)**
- **BACKE, Jakob**
  **58272 LINKÖPING (SE)**
- **PHOPASE, Jaywant**
  **58431 LINKÖPING (SE)**
- **CRISPIN, Xavier**
  **61771 KIMSTAD (SE)**

(74) Representative: **AWA Sweden AB**
**Box 45086**
**104 30 Stockholm (SE)**

(54) **CHEMICALLY MODIFIED LIGNIN**

(57) The present inventive concept relates to an electrode material for use in an electrochemical storage device, comprising a modified lignin being a lignin functionalized with at least one aromatic moiety selected from the list of catechol, hydroquinone, and phenols substituted with an alkoxy group, wherein a total content of phenolic hydroxyl groups is at least 4.0 mmol/g, as determined by $^{31}P$ Nuclear Magnetic Resonance Spectroscopy.

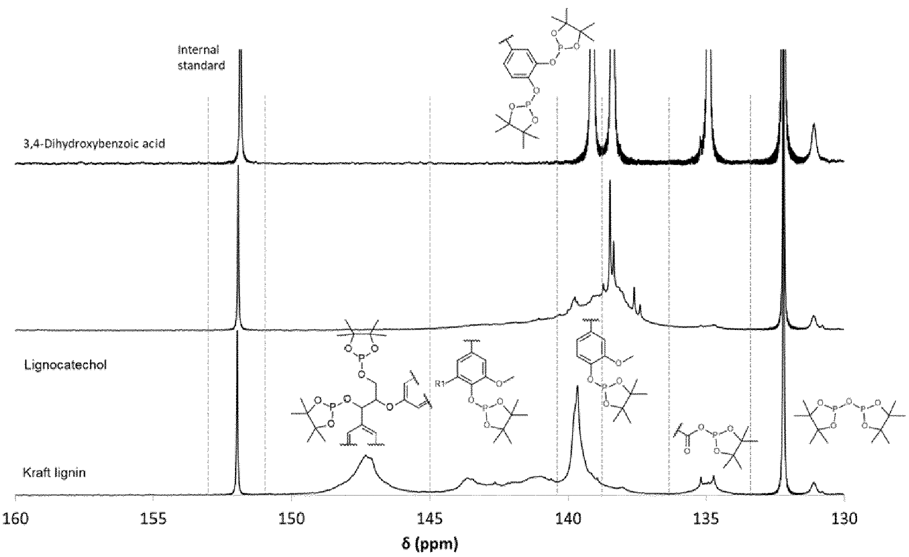


*Fig. 1*

EP 4 481 778 A1

## Description

### Technical field

The present invention relates to an electrode material, to a process of making such an electrode material, and an electrochemical device comprising such an electrode material.

### Background

Electrochemical energy storage (EES) devices comprising electrodes, such as batteries, supercapacitors and pseudocapacitors, have shown a wide variety of applications ranging from household electronics and electrical vehicles. The electrode materials commonly used today are typically scarce and expensive. Sustainable and clean energy from renewable resources, such as biomaterials, has attracted more and more attention with the rising awareness of and desire to slow down the global warming.

Lignin is one example of a renewable biomaterial. Lignin is a biopolymer comprising aromatic phenol groups which may be linked to monolignol units, methylated forming methyl ether bonds, or present in free phenol form. The monolignol units are typically connected by ether bonds. Lignin can store electric energy by exhange of protons/metal ions and electrons.

The main motivator for using lignin for energy storage applications is cost and availability. However, the electrochemical performance and chemical stability still remains a challenge.

Therefore, there is a need in the industry for improved EES devices, and in particular improved electrode materials based on lignin.

### Summary

An object of the present invention is to provide an electrode material which at least partly alleviates the above mentioned drawbacks. This and other objects, that will become apparent in the following, are accomplished by an electrode material, a method for preparing an electrode material, and an electrochemical storage device as described in accordance with the aspects and embodiments herein.

In one aspect, there is provided an electrode material for use in an electrochemical storage device, comprising a modified lignin being a lignin functionalized with at least one aromatic moiety selected from the list of catechol, hydroquinone, and phenols substituted with an alkoxy group, wherein a total content of phenolic hydroxyl groups in the modified lignin is at least 4.0 mmol/g, such as at least 4.15 mmol/g, such as at least 4.3 mmol/g, such as at least 4.5 mmol/g, as determined by $^{31}$P Nuclear Magnetic Resonance Spectroscopy.

The inventors have surprisingly found that a well-performing environmentally friendly electrode material can be achieved through the incorporation of lignin, provided that the lignin is functionalized with at least one aromatic moiety selected from the list of catechol, hydroquinone, and phenols substituted with an alkoxy group, wherein a total content of phenolic hydroxyl groups in the modified lignin is at least 4.0 mmol/g, such as at least 4.15 mmol/g, such as at least 4.3 mmol/g, such as at least 4.5 mmol/g as determined by $^{31}$P Nuclear Magnetic Resonance Spectroscopy.

In one aspect, there is provided a method for preparing an electrode material comprising the steps of providing a lignin source selected from Kraft lignin, fractioned Kraft lignin, lignosulfonate, hydrolysis lignin, soda lignin, and organosolv lignin, providing a reactant selected from the group consisting of catechol, hydroquinone, and phenols substituted with an alkoxy group, and combining the lignin source and the reactant to form a mixture. The method further comprises steps of reacting the mixture at an elevated temperature for a predetermined time in the presence of a strong acid, precipitating a modified lignin, and preparing an electrode material comprising the modified lignin.

The inventors have surprisingly found that an electrode material comprising a modified lignin can be produced by providing a particular lignin source and a particular reactant, and reacting the mixture in the presence of a strong acid at an elevated temperature, and for a predetermined time. The method allows for the production of an environmentally friendly electrode material which exhibits desirable electrochemical properties. The electrode material has further been found to be stable in, e.g., acidic conditions.

In one aspect, there is provided an energy storage device comprising a cathode, an anode and an electrolyte disposed between the cathode and the anode, wherein the cathode comprises the electrode material as described herein.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that this disclosure is not limited to the particular component parts of the device described or steps of the methods described as such device and method may vary. It is also to be understood that the

terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

## Brief description of the drawings

Fig. 1 shows quantitative $^{31}P$ NMR spectra and signal assignment of Pristine and modified lignin derivative.

Fig. 2a-d show Cyclic Voltammograms (CVs) (at 5 mV/s) and galvanostatic discharge plots in 0.1 M $HClO_4$ electrolyte at 0. 1 A/g and 1 A/g respectively and the Ragone plot of selected modified lignins.

Fig. 3a-b show CVs (at 5 mV/s) and galvanostatic discharge plots in 0.1 M $HClO_4$ electrolyte at 0.1 A/g ,1 A/g and 8 A/g respectively of modified lignins prepared from fractionated lignin.

Fig. 3c show galvanostatic discharge plots in 0.1 M $HClO_4$ electrolyte at 1 A/g of softwood hydrolysis lignin, hardwood hydrolysis lignin and modified lignins prepared from softwood and hardwood hydrolysis lignins, respectively.

Fig. 4a-b show CVs (at 5 mV/s) and galvanostatic discharge plots in 0.1 M $HClO_4$ electrolyte at 1 A/g of selected different phenol formaldehyde resins prepared from lignin and catechol. Kraft lignin and a modified lignin prepared from Kraft lignin is included for comparison.

Fig. 5a-d show the CV at 5 mV/s for Kraft lignin fractionated in acetone along with the corresponding catechol modifications; galvanostatic discharge plot of the Kraft lignin fractionated in acetone at 0.1, 1 and 4 A/g discharge rates, and the galvanostatic discharge plot comparison for the Kraft lignin fractionated in acetone along with the corresponding catechol modifications at 0.1 and 1 A/g respectively.

## Detailed description

The present disclosure relates to new and enhanced electrode materials, methods for producing such electrode materials, and electrochemical energy storage devices comprising such electrode materials.

In one aspect, there is provided an electrode material for use in an electrochemical storage device, comprising a modified lignin being a lignin functionalized with at least one aromatic moiety selected from the list of catechol, hydroquinone, and phenols substituted with an alkoxy group, wherein a total content of phenolic hydroxyl groups in the modified lignin is at least 4.0 mmol/g, such as at least 4.1 mmol/g, such as at least 4.15 mmol/g, such as at least 4.2 mmol/g, such as at least 4.25 mmol/g, such as at least 4.3 mmol/g, such as at least 4.35 mmol/g, such as at least 4.4 mmol/g, such as at least 4.45 mmol/g, such as at least 4.5 mmol/g, such as at least 4.55 mmol/g, such as at least 4.6 mmol/g, such as at least 4.65 mmol/g, such as at least 4.7 mmol/g, such as at least 4.75 mmol/g, such as at least 4.8 mmol/g, such as at least 4.85 mmol/g, such as at least 4.9 mmol/g, such as at least 4.95 mmol/g, such as at least 5.0 mmol/g, such as at least 5.05 mmol/g, such as at least 5.1 mmol/g, as determined by $^{31}P$ Nuclear Magnetic Resonance Spectroscopy.

The inventive electrode material has proven to be a highly promising electrode material in a plurality of different applications, such as electrochemical energy storage devies applications in general and battery applications in particular. The present inventive concept provides an environmentally friendly electrode material which has relatively high redox activity. Furthermore, the electrode material has a relatively low solubility which is useful in for example batteries with liquid or gel electrolytes. Thus, the electrode material having a low solubility in, e.g., aqueous electrolytes advantageously allows for a stable electrode material allowing for a long-lasting battery. The electrode material may be manufactured using naturally abundant resources such as lignin. The lignin comprised in the electrode material is modified in such a way that the content and accessability of redox active species increased. The electrode material has been found to exhibit a promising charge density.

Herein, the term "electrode material" refers to a material which may be a conductive material arranged on a current collector to form an electrode and participate in a redox reaction during operation of for example a battery. The electrode material may for example be coated on a current collector.

In the state of the art, it has proven difficult to incorporate lignin in electrode materials. The lignin electrodes of the state of the art has proven to possess poor electrical conductivity, low redox activity and poor stability in for example acidic conditions.

Lignin is considered a waste product from forest based large scale industries. Unmodified or native lignin is generally not stable in acidic conditions. For example, unmodified lignin, native lignin, and Kraft lignin generally comprises redox active groups such as catechols. However, the inventive electrode material comprising modified lignin is stable in acidic aqueous electrolytes. Without wishing to be bound by any particular theory, the inventors believe that this is due to

the modified lignin comprises a reduced number of ether bonds, such as the β-O-4' bonds, compared to, e.g., Kraft lignin, fractioned Kraft lignin, lignosulfonate, hydrolysis lignin, soda lignin, and organosolv lignin. The β-O-4' bonds are prone to hydrolysis in both acidic and basic environments. Further, the β-O-4' have been found unstable during electrochemical cycling in both acidic and neutral pH. The inventors have found that a reduced amount of ether bonds mean less bonds prone to hydrolysation and consequently provides a more stable electrode material.

"A total content of phenolic hydroxyl groups" is to be understood as the total content of phenolic hydroxyl groups present in the modified lignin. In this regard, no distinction is to be made between phenolic hydroxyl groups stemming from one or more steps of the modification process disclosed in another aspect of the invention or phenolic hydroxyl groups present in the lignin in which modifications was made. Expressed differently, the phenolic hydroxyl groups stemming from the synthetic functionalization as well as the phenolic hydroxyl groups naturally present in lignin all count towards the total content of phenolic hydroxyl groups. Expressed differently, lignins such as Kraft lignin and lignosulfonate comprise phenolic hydroxyl groups. However, the modified lignin comprises an increased amount of phenolic hydroxyl groups as compared to its unmodified counterpart.

Phenolic hydroxyl groups may for example be hydroxyl groups comprised in catechol, hydroquinone or phenols substituted with an alkoxy group. It is understood that phenolic hydroxyl groups also refer to hydroxyl groups comprised in the likes of phenol, resorcinol, and trihydroxybenzenes. The term "phenolic hydroxyl groups" is understood by the person skilled in the art and refers to any hydroxyl group bonded to an aromatic moieity, preferably a six-carbon containing aromatic moieity.

For example, in the present disclosure, a phenol is considered to comprise one phenolic hydroxyl group and a catechol is considered to comprise two phenolic hydroxyl groups.

The electrode material of the present disclosure comprises modified lignin which in turn comprises a larger amount of phenolic hydroxyl groups as compared to its unmodified counterpart. Consequently, the electrode material comprises an increased amount of redox active moieties which participate in redox reactions during battery cycling allowing for improved electrochemical properties.

It is contemplated that the lignin can be functionalized with the aromatic moieties through condensation reactions thereby increasing the content of phenolic hydroxyl groups.

Herein, the term "aromatic moiety" is to be understood as a cyclic aromatic hydrocarbon comprising at least one hydroxyl group, such as a monocyclic hydrocarbon comprising an hydroxyl group. The monocyclic aromatic hydrocarbons may for example comprise one or more methyl groups and one or more hydroxyl groups.

Aromatic molecules are cyclic, planar and have $4n+2$ $\pi$ electrons, where n is an integer. Aromatic molecules are known to the person skilled in the art.

It is understood that "functionalized with at least one aromatic moiety" refers to a carbon-carbon bond formed between lignin and, e.g., a catechol, hydroquinone, or a phenol substituted with an alkoxy group. Stated differently, "functionalized with at least one aromatic moiety" refers to that the modified lignin comprises a higher content of said aromatic moeities as compared to, e.g., Kraft lignin or lignosulfonate. In particular, the modified lignin functionalized with at least one aromatic moiety selected from the list of catechol, hydroquinone, and phenols substituted with an alkoxy group has a total content of phenolic hydroxyl groups in the modified lignin is at least 4.0 mmol/g, as determined by $^{31}P$ Nuclear Magnetic Resonance Spectroscopy. This is advantageous in that it improves the electrochemical properties of the modified lignin.

Herein, the term "catechol", also referred to as 1,2-dihydroxybenzene, is an organic compound known to the person skilled in the art.

Herein, the term "hydroquinone", also referred to as benzene-1,4-diol, is an organic compound known to the person skilled in the art.

Herein, the term "phenol", also referred to as benzenol, is an organic compound comprising a phenyl group bonded to a hydroxy group. Phenol is known to the person skilled in the art.

Herein, the term "phenols substituted with alkoxy group" refers to a phenol wherein at least one hydroxyl group originally present in the phenol has been substitued with an alkoxy group or at least one hydrogen originally comprised in the phenol has been substituted with an alkyl group.

Herein, phenol substituted with an alkoxy group may advantagously refer to 2-methoxyphenol and/or 4-methoxyphenol.

The term "alkoxy group" is an alkyl group which is singularly bonded to oxygen, such as methoxy groups or ethoxy groups. Alkoxy groups are know to the person skilled in the art.

$^{31}P$ Nuclear Magnetic Resonance Spectroscopy is known to the person skilled in the art. The method for determining the total content of phenolic hydroxyl groups is described under the heading "Sample derivatization and NMR characterization" below.

Herein, the term "electrochemical storage device" includes batteries, supercapacitors, pseudocapacitors, and hybrid batteries having one supercapacitor electrode.

In some embodiments, the aromatic moiety is catechol, 2-methoxyphenol and/or 4-methoxyphenol.

2-Methoxyphenol, also referred to as guaiacol, is a naturally occurring phenol that due to its low toxicity and low melting point is a suitable starting material for the modified lignin synthesis. Guaiacol can be prepared in large volumes from lignin using e.g. a pyrolysis reaction. Consequently, a modified lignin being functionalized with guaiacol can hence be classified as an environmentally sustainable electrode material.

4-methoxyphenol, also referred to as mequinol, is known to the person skilled in the art. 4-methoxyphenol is advantageous, e.g., due to its low toxicity.

In some embodiments, the lignin is selected from the group consisting of Kraft lignin, fractioned Kraft lignin, lignosulfonate, hydrolysis lignin, soda lignin, and organosolv lignin.

In some embodiments, the lignin is lignosulfonate. Lignosulfonate has been found to provide particularly improved properties when modified and comprised in the electrode material.

In some embodiments, the lignin is Kraft lignin. Kraft lignin has been found to provide particularly improved properties when modified and comprised in the electrode material.

Kraft lignin may be understood as lignin derived from Kraft pulping (sometimes referred to as the sulfate process). Kraft lignin is known to the person skilled in the art. The Kraft lignin may have been processed using the lignoboost process, i.e., obtained and purified from the black liqueor produced in a Kraft pulping process.

Fractioned Kraft lignin may be understood as a lignin fraction with decreased polydispersity compared to the parent Kraft lignin where each fraction exhibit different molecular weight distributions.

Lignosulfonate is a type of lignin which may be considered a byproduct from the production of wood pulp using sulfite pulping.

Hydrolysis lignin is a type of lignin which may be considered a byproduct from pre-treatment processes in cellulosic ethanol plants.

Soda lignin may be understood as the type of lignin derived from soda pulping, where sodium hydroxide is utilized as a cooking chemical.

Organosolv lignin may be understood as the lignin derived from the organosolv pulping technique, where an organic solvent is used to solubilize lignin and hemicellulose.

Herein, the term "electrically conducting carbon material" refers to an electrically conducting carbonaceous material, i.e., materials mainly consisting of carbon. Examples thereof are graphite, graphene, carbon black, and carbon nanotubes.

In some embodiments, each alkyl group of the alkoxy group has a molecular weight of lower than 225 g/mol, such as lower than 150 g/mol, such as lower than 100 g/mol, such as lower than 50 g/mol as determined by $^{31}P$ Nuclear Magnetic Resonance Spectroscopy. This method for determining the molecular weight of each alkyl group in of the alkoxy group in the modified lignin is described under the heading "Sample derivatization and NMR characterization" below. The specific molecular weights advantageously allow for an electrode material having relatively high charge density.

In some embodiments, each alkyl group of the alkoxy group is a methyl group or an ethyl group. The specific groups have been found particulary suitable, e.g., as they occupy a relatively small space.

In some embodiments, the modified lignin has an aliphatic alcohol content lower than 0.2 mmol/g, such as lower than 0.1 mmol/g, as determined by $^{31}P$ Nuclear Magnetic Resonance Spectroscopy. This method for determining the aliphatic alcohol content of the modified lignin is described under the heading "Sample derivatization and NMR characterization" below. Some ether bonds, such as benzylic ethers, are hydrolyzed during the lignin modification reaction and may then form aliphatic alcohols or more chemically stable carbon-carbon bonds. A low content of aliphatic alcohols is therefore a sign of the formation of a lignin that allows for an electrode material having an improved stability during electrochemical cycling in, e.g., neutral and acidic conditions. Acidic conditions may be construed as aqueous solutions having a relatively low pH, such as a pH of less than seven, such as less than 6, such as less than 5, such as less than 4. Generally, the pH of an electrolyte of an electrochemical cell is in the range of 4-7. It is understood, that during operation of an electrochemical cell the local pH may vary.

In some embodiments, the modified lignin has a water solubility of <10 g/L at pH 7. The specific water solubility, i.e., solubility in aqueous electrolytes has proven to be suitable for solid state battery applications.

In some embodiments, the modified lignin is present in a resin. This advantageously allows for an electrode material having an improved mechanical stability and a high reactivity. In some embodiments, the modified lignin and a catechol is crosslinked with a formaldehyde or paraformaldehyde group. The modified lignin crosslinked with formaldehyde or paraformaldehyde phenol resin is redox active and thus partakes in redox reactions of the electrode material during operation. Preferably, an electrode comprising a modified lignin crosslinked with formaldehyde or paraformaldehyde phenol resin has a discharge capacity of at least 40 mAh/g. Preferably, such an electrode further comprises carbon.

It is understood that the modified lignin is crosslinked with a catechol and that the formaldehyde or paraformaldehyde phenol act as a cross-linker via the methylene linker.

The term "methylene linker" may also be referred to as methylene moietes, methylene bridges, or methylene groups. Methylene groups are know to the person skilled in the art. "Crosslinked" may thus be understood as one moiety of the modified lignin and one moiety of the catechol being bonded to the same carbon of a methylene group.

Herein, the term "resin" refers to a solid, semi-solid or highly viscous substance comprising organic substances, such as lignin.

Formaldehyde phenol resin, sometimes referred to as phenol formaldehyde resin, and paraformaldehyde phenol resin are known to the person skilled in the art.

Expressed differently, the electrode material may comprise the modified lignin crosslinked to a catechol, thereby being in the form of a resin.

In some embodiments, the electrode material further comprises an electrically conducting carbon material, such as graphite, such as graphene, such as carbon black, such as carbon nanotubes. The electrically conducting material provides improved electrically conductive properties to the electrode material. The electrically conducting material is preferably arranged in close contact with the modified lignin allowing for a strong interaction there between. As the electrically conducting carbon material counteracts the inherently present insulating properties appearing in parts of a lignin, this allows for an increase of the modified lignin's contribution to the performance of the electrode material. Expressed differently, the electrically conducting carbon materials aids in the transport of electrons to the electrical circuit. The electrons stem from redox reactions in, e.g., the modified lignin.

Herein, the term "electrically conducting carbon material" refers to an electrically conducting carbonous material, i.e., materials mainly consisting of carbon. Examples thereof are graphite, graphene, carbon black, and carbon nanotubes.

In some embodiments, the modified lignin comprises a structure of formula (I) and/or (II):

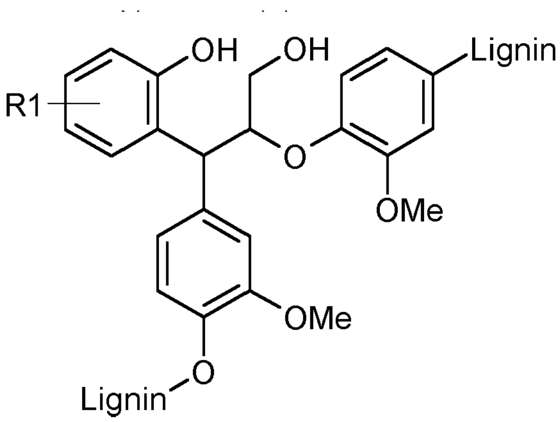

(I)

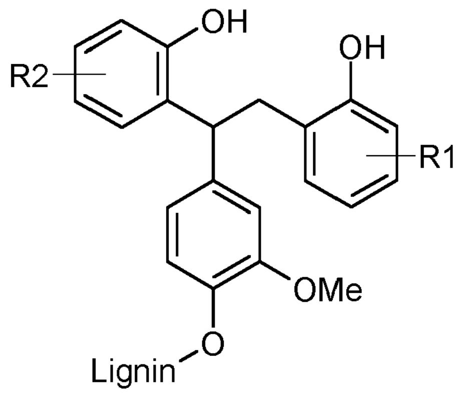

(II)

where R1 and R2 = OH or OMe. (Me=$CH_3$)

The structures of formula (I) and (II) provide a relatively high amount redox active functional groups which advantageously allows for a well-performing electrode material.

In one aspect, there is provided a method for preparing an electrode material comprising the steps of providing a lignin source selected from Kraft lignin, fractioned Kraft lignin, lignosulfonate, hydrolysis lignin, soda lignin, and organosolv lignin, providing a reactant selected from the group consisting of catechol, hydroquinone, and phenols substituted with an alkoxy group, and combining the lignin source and the reactant to form a mixture. The method further comprises steps of reacting the mixture at an elevated temperature for a predetermined time in the presence of a strong acid, precipitating a modified lignin, and preparing an electrode material comprising the modified lignin.

Effects and features of this aspect are largely analogous to those described above in connection with the previously discussed aspect concerning the electrode material.

The method advantageously allows for an efficient method of preparing an electrode material having desirable properties. The lignin source comprises a relatively high amount of hydrolysable ether bonds present in the β-O-4' lignin subsubstructure which have been found unstable in acidic aqueous solutions, such as acidic aqueous electrolytes. The method advantageously reduces the number of hydrolysable ether bonds in the lignin source thus allowing for the production of a more stable electrode material in, e.g., acidic conditions and during electrochemical cycling. For example, the method allows for reducing the number of ether bonds in the β-O-4' substructure by replacing the hydrolysable bonds with non-hydrolysable carbon-carbon bonds.

In some embodiments, the lignin source is Kraft lignin or lignosulfonate. In some embodiments, the lignin source is lignosulfonate. In some embodiments, the lignin source is Kraft lignin.

Formula (III) shows an example reaction scheme of the production of a modified lignin. In the present example, a

lignin source and phenols substituted with an alkoxy group are provided as reactants and react so as to form two products each representing a modified lignin. In some embodiments, the present reaction takes place in concentrated sulfuric acid and under heating.

Formula (III):

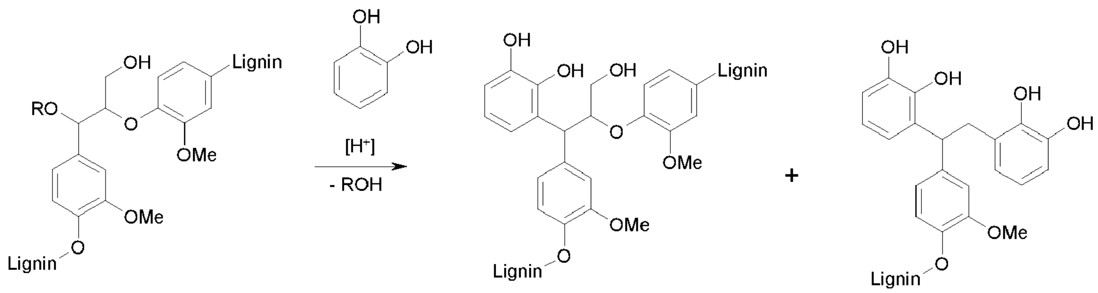


It is understood that lignin may be considered a diverse and complex chemical. Without wishing to be bound by any particular theory, according to the present disclosure a general strategy for functionalization of lignin comprises aliphatic alcohols (R = H) or hydrolysable ether bonds (R = Lignin) in the β-O-4' lignin substructure being replaced by carbon-carbon bonds. Condensation may occur via electrophilic aromatic substitution by the benzyl carbocation on the electron-rich catechol. To the lignin substructure, one or two phenol units can be added, as represented in the two right-most chemical structures of formula (III).

In some embodiments, the step of preparing an electrode material further comprises combining the modified lignin with a formaldehyde or paraformaldehyde and 4-methoxyphenol to form a second mixture, and reacting the second mixture to form a resin comprising the modified lignin, 4-methoxyphenol and formaldehyde or paraformaldehyde. In some embodiments, the step of reacting the second mixture to form a resin comprises crosslinking the modified lignin and the 4-methoxyphenol to formaldehyde or paraformaldehyde.

In some embodiments, wherein combining the modified lignin with a formaldehyde or paraformaldehyde and 4-methoxyphenol to form a second mixture comprises heating said second mixture to a temperature of 60-120 °C, such as 70-110 °C for a second predetermined time. Heating said second mixture to a temperature of 60-120 °C, such as 70-110 °C for a second predetermined time ensures the formation of crosslinks between the modified lignin crosslinked to formaldehyde or paraformaldehyde phenol resin.

In some embodiments, the step of preparing an electrode material comprising the modified lignin, further comprises a sub-step of mechanically milling the modified lignin and a conductive carbon material. The sub-step of mechanically milling increases the contact area between the modified lignin and the conductive material. This allows for the production of an improved electrode material as the increased contact area allows for electron transport from the modified lignin via the conductive material to an electrical circuit when the electrode material is in use.

In some embodiments, the mechanically milling comprises solvent-free mechanical milling, such as solvent-free ball milling. Solvent-free milling allows for an environmentally friendly method by avoiding the use of toxic and/or non-eco-friendly solvents. Solvent-free ball milling of lignin is described in European patent application 19155073.0, published as EP3691000 A1.

In some embodiments, the elevated temperature is in the range of 160-200 °C, such as 170-190 °C.

In some embodiments, the strong acid is sulfuric acid. The sulfuric acid has proven to be particularly suitable in the production of the electrode material comprising modified lignin. The sulfuric acid may be concentrated sulfuric acid. In some embodiments, the strong acid has a concentration of at least 15 M, such as at least 17 M, such as at least 18 M.

Sulfuric acid, also referred to as $H_2SO_4$, is known to the person skilled in the art.

In some embodiments, the lignin is lignosulfonate. This particular lignin has proven to be particularly suitable in the production of the electrode material. The lignosulfonate has proven provide an electrode material having particularly desirable properties.

In some embodiments, the lignin is Kraft lignin. This particular lignin has proven especially suitable in the production of the electrode material. The Kraft lignin has proven to provide an electrode material having particularly desirable properties.

In one aspect, there is provided an energy storage device comprising a cathode, an anode and an electrolyte disposed between the cathode and the anode, wherein the cathode comprises the electrode material as described herein. The EES devise is environmentally friendly and possess desirable electrochemical properties.

Herein, the terms "positive electrode" (or "positrode" or "cathode") and "negative electrode" (or "negatrode" or

"anode") are known to the person skilled in the art.

In some embodiments, the electrolyte is a water-based electrolyte provided as a hydrogel. An EES device comprising the electrode material and an electrolyte being a water-based electrolyte provided as a hydrogel has proven to provide especially desirable properties in terms of, e.g., stability and discharge rate.

## Examples

*Synthesis of modified lignin*

Modified lignins were prepared using various commercially available lignin, such as soft wood or hard wood Kraft lignin purified using the lignoboost process, hydrolysis lignin or technical grade lignosulfonate. Modified lignins were prepared under acidic conditions and solvent free conditions by a condensation reaction between lignin and a catechol, 4-methoxyphenol and guaiacol, respectively as described below.

Various lignins [Kraft lignin, lignosulfonate, hydrolysis lignin] (10.0 g) were each dissolved in 20 g of molten catechol, guaiacol, 4-methoxyphenol. Concentrated $H_2SO_4$ (5mL) was then added dropwise to the reaction mixture at 180 °C while stirring, for 60 minutes. The reaction mixture was cooled down and dissolved in 200 ml acetone and then precipitated by adding slowly into 1.5 liter of dilute $H_2SO_4$ (2 N (Normality)). The precipitate was separated using sintered funnels. The crude product was washed with water (4 $\times$ 250 mL) followed by diethyl ether (4 $\times$ 200 mL). The product obtained was dried under vacuum at 120 °C for 5 hours to give modified lignins 2, 3, 4, 6, 10, 11, 13 and 15 (Table 1) as brown powders.

*Synthesis of modified lignin catechol formaldehyde resin*

The modified lignin catechol formaldehyde resins 16 to 19 were synthesized by batch copolymerization according to the weight ratio of modified lignin (sample 3 in table 1) to formaldehyde ranging from (1:0.1) to (1:1); or to the weight ratio of 4-methoxyphenol, lignocatechol (sample 3 in table 1) to formaldehyde (0.25:1:0.6). The NaOH concentration (weight ratio of NaOH to the weight of 4-methoxyphenol and modified lignin) was 20%. Modified lignin, 4-methoxyphenol and NaOH were mixed in a flask and heated at 80°C. The formaldehyde solution was added in portions and the mixture was heated for 16h at reflux. The reaction mixture was cooled to room temperature and precipitated by adding slowly into dilute $H_2SO_4$ (1 N). The precipitate was separated using sintered funnel. The crude resin was washed with water followed by diethyl ether. The product obtained was grinded and dried under vacuum to give resin samples 16-19.

An acid copolymerized modified liginin catechol formaldehyde resin, sample 20, was prepared according to the weight ratio of 4-methoxyphenol, modified lignin (sample 3 in table 1) to paraformaldehyde (1:1:0.5). The sulfuric acid concentration (weight ratio of sulfuric acid to the weight of 4-methoxyphenol and modified lignin) was 20%. Sulfuric acid was added to a mixture of 4-methoxyphenol, modified lignin and paraformaldehyde and the reaction mixture was heated at 100 °C over night. The reaction mixture was cooled to room temperature and precipitated by adding slowly into dilute $H_2SO_4$ (2 N). The precipitate was separated using sintered funnel. The crude resin was washed with water followed by diethyl ether. The crude resin was grinded and dried under vacuum to give sample 20 as a brown powder.

*Gel Permeation Chromatography analysis*

Gel Permeation Chromatography (GPC) analyses were performed using Agilent 1260 Infinity II instrument with triple detectors (RI, LS, Viscometry). Two GPC columns (Agilent PolarGel M, PL1117-6800, 8 $\mu$m, 300 $\times$ 7.5 mm) were connected in series for analyses. HPLC-grade DMF with 0.1% LiBr was used as the eluent (0.5 mL min-1, at 30°C). Standard calibration was performed with polymethyl methacrylate standards (EasiVials, MW range 535 - 2210 000 g/mol). The dissolved samples (DMF) were shaken for 10 mins at room temperature and filtered over a 0.45 $\mu$m syringe filter. Sample detection was performed with triple detectors. All data were recorded using Agilent GPC/SEC V2.2 Software.

The molecular weights of the lignin and modified lignin fractions were analyzed by GPC. The molecular weights of the technical lignin as well as the fractioned Kraft lignin 8 and 9 were quite different compared to previously reported data (Mn = 700 g/mole, Mw = 6500 g/mole, PDI = 9.89 for KL). Typical literature values are Mn = 1400 g/mole, Mw = 6000 g/mole, PDI = 4.3. The absolute molecular weight values differed a lot depending on the type solvents used as eluent and the references used in the experimental set-up and molecular values should be regarded as relative. The synthesized modified lignins 2, 3 and 4 were all characterized by a reduced molecular weight, since the reaction conditions used may result in ether cleavage and hence breakage of the chemical bonds that builds up the polymeric structure of lignin (Table 1). Molecular weight of the modified lignin formaldehyde resins could not be recorded.

Table 1: Number average molecular weight (Mn), weight average molecular weight (Mw), and polydispersity index (PDI) for sampes 1-19. Samples with empty cells have not been evaluated.

| ID | Sample description | Mn (g/mol) | Mw (g/mol) | PDI |
|---|---|---|---|---|
| 1 | Soft wood Kraft lignin (KL) *comparative* | 1368 | 25370 | 18.5 |
| 2 | Modified Lignin (catechol + KL) *inventive* | 817 | 11910 | 14.6 |
| 3 | Modified lignin (4-methoxyphenol + KL) *inventive* | 589 | 8075 | 13.7 |
| 4 | Modified lignin (2-methoxyphenol + KL) *inventive* | 580 | 5185 | 8.9 |
| 5 | Soft wood lignosulfonate (LS) *comparative* | | | |
| 6 | Modified lignin (catechol + LS) *inventive* | 281 | 4565 | 16.2 |
| 7 | 3,4-Dihydroxybenzoic acid *comparative* | | | |
| 8 | ASKL *comparative* | 814 | 5947 | 7.3 |
| 9 | AIKL *comparative* | 5360 | 199000 | 37.0 |
| 10 | Modified lignin (catechol and ASKL) *inventive* | 354 | 4508 | 12.8 |
| 11 | Modified lignin (catechol and AIKL) *inventive* | 586 | 10050 | 17.2 |
| 12 | Softwood hydrolysis lignin *comparative* | | | |
| 13 | Modified lignin (catechol and softwood hydrolysis lignin) *inventive* | | | |
| 14 | Hardwood Kraft lignin *comparative* | | | |
| 15 | Modified lignin (catechol and hardwood hydrolysis lignin) *inventive* | | | |
| 16 | Modified lignin sample 3 formaldehyde resin (1:1) *inventive* | | | |
| 17 | Modified lignin sample 3 formaldehyde resin (1:0.5) *inventive* | | | |
| 18 | Modified lignin sample 3 formaldehyde resin (1:0.1) *inventive* | | | |
| 19 | 4-Methoxyphenol: Modified lignin sample 3:formaldehyde resin (0.25:1:0.6) *inventive* | | | |
| 20 | 4-Methoxyphenol: Modified lignin sample 3:paraformaldehyde resin (1:1:0.5) *inventive* | | | |

*Sample derivatization and NMR characterization*

The obtained hydroxyl groups of modified lignin samples were phosphitylated and quantified using $^{31}$P NMR spectroscopy by an adjusted method according to Granata and Argyropoulos [A. Granata D. S. Argyropoulos, J. Agric. Food Chem. (1995) 43, 1538-1544]. A modified lignin sample was dissolved using a mixture of DMF and pyridine, in presence of an internal standard (IS) and relaxation reagent, and phosphitylated using a mixture of a derivatization reagent and deuterated chloroform. The phosphitylated sample was then scanned using liquid state $^{31}$P-NMR spectroscopy and the hydroxyl groups were quantified by integration of the corresponding signals from obtained $^{31}$P-NMR spectra.

The quantitative hydroxyl group determination was analyzed by $^{31}$P NMR and a comparison was done between modified lignin synthesized from different starting materials and unmodified Kraft lignin. Lignin does not contain any phosphorus and the $^{31}$P NMR method was made possible by preparing a phosphite ester of its hydroxyl groups. Lignosulfonate (sample 5) could not be analyzed due too poor solubility in the standard organic solvents used for NMR analysis. The chemical environment surrounding the different hydroxyl groups affect the chemical shifts of the $^{31}$P nuclei so as to allow for separate detection of the aliphatic-, 5-substituted- (syringyl and 5-condensed structures), guaiacyl-, p-hydroxyphenyl hydroxyl groups and the amount of carboxyl groups can be detected see Figure 1. In other words, Figure 1 depicts Quantitative $^{31}$P NMR spectra and signal assignment of Pristine and modified lignin derivatives. Content of hydroxyl groups (OH) was calculated from integrated area. The catechol group is overlapping the guaiacyl and the p-hydroxyphenyl groups with peaks at 139 and 138 ppm respectively. The content of p-hydroxyphenyl groups in Kraft lignin was low and the total content of chemically added catechol in modified lignin 2 and 6 was calculated using formula (IV) to 0.82 and 1.87 mmol/g, respectively.

$$C_{modified\ lignin} = C_{H+Catechol} - C_H\ [Kraft\ lignin]\ (IV)$$

The high catechol content of 6 compared to 2 may be due to a high content of ether bonds that can participate in the condensation reactions in sample 6 and that soluble residual lignosulfonate fractions were removed during purification. The analysis of added methoxyphenol content in sample 3 - 5 was more complex and comparisons are based on total phenolic content Σ Ph-OH. The peaks for the phenolic OH (Ph-OH) at 137-144 ppm increased significantly after the phenylation for all modified lignins. The chemical modification increased the phenolic content of lignin from 3.26 mmol/g for Kraft lignin 1 to 4.19 - 6.48 mmol/g for modified lignins 2-6 (Table 2).

For the modified lignin compounds 2, 3, and 4, the peak for aliphatic OH at 145-150 ppm almost completely disappeared, which is a strong indication of a successful phenylation type reactions. Other types of reactions that reduced the aliphatic hydroxyl content may have occurred, such acid induced deformylation of the Cγ-OH unit. The modified ligin 6 prepared from lignosulfonate 5 had some remaining aliphatic OH which may be an indication of the lower reactivity triggered by the sulfonate group or an initially higher content of ethers in lignosulfonate compared to Kraft lignin due to a less condensed structure. According to literature data, the typical phenol content in lignosulfonate is 1.1 mmol/g.

Table 2: Contents of functional groups in for example lignin and functionalized lignin, as determined according using $^{31}P$ NMR. The contents are presented as mmol functionalized group/mass of sample. Sample 1, 8 and 9 are comparative, sample 2-4, 6, 10 and 11 are inventive samples, and 3,4-dihydroxybenzoic acid was used as internal standard. Al-OH is the aliphatic hydroxyl group content, Syringyl-OH is the content of syringol groups, G + catechol is the content of guaiacol groups and one of the hydroxyl groups in catechol (overlapping peaks as can be seen in Figure 1), H + catechol is the content of coniferyl groups and one of the hydroxyl groups in catechol (overlapping peaks as can be seen in Figure 1), COOH is the carboxylic acid content, Σ Ph-OH is the sum of all phenolic hydroxyl groups, Σ-OH is the sum of phenolic hydroxyl groups, aliphatic hydroxyl groups and carboxylic acids).

| ID | Al -OH (mmol/g) | Syringyl -OH (mmol/g) | Σ C5-sub Ph -OH (mmol/g) | G + catechol (mmol/g) | H + catechol (mmol/g) | COOH (mmol/g) | Σ Ph -OH (mmol/g) | Σ -OH (mmol/g) |
|---|---|---|---|---|---|---|---|---|
| 1 | 1.44 | 0 | 1.32 | 1.80 | 0.14 | 0.39 | 3.26 | 5.09 |
| 2 | 0.02 | 0 | 1.34 | 4.18 | 0.96 | 0.19 | 6.48 | 6.69 |
| 3 | 0.04 | 0 | 0.70 | 2.43 | 1.06 | 0.06 | 4.19 | 4.29 |
| 4 | 0.03 | 0 | 1.46 | 2.79 | 0.72 | 0.13 | 4.98 | 5.13 |
| 6 | 0.13 | 0 | 1.09 | 3.02 | 2.01 | 0.18 | 6.11 | 6.42 |
| 8 | 1.17 | 0 | 1.22 | 1.79 | 0.21 | 0.36 | 3.22 | 4.75 |
| 9 | 2.21 | 0 | 0.90 | 0.92 | 0.20 | 0.20 | 2.01 | 4.42 |
| 10 | 0.06 | 0 | 1.21 | 2.87 | 1.69 | 0.14 | 5.78 | 5.97 |
| 11 | 0.06 | 0 | 1.35 | 2.90 | 1.71 | 0.06 | 5.96 | 6.08 |
| 3,4-Dihydroxybenzoic acid (7) | 0.00 | 0 | 0.00 | 5.26 | 5.30 | 5.35 | 10.56 | 15.91 |

*Electrode preparation*

25 μm-thick stainless steel (SS 316L) foils were used as the current collectors and as substrates. SS 316L foils were washed in 3M HCl for 3 minutes and then rinsed twice in deionzied water (DIW). After acid washing, one side of the SS 316L foil was coated with a layer of colloidal graphite carbon (CC) using a wire-bar coater (RK K-Control Coater) with the wet film thickness of 4 μm and dried at 110 °C for 1 hour. Lignin carbon electrode materials were fabricated via solvent-free mechanical milling (ball milling) of conductive carbon (ENSACO 350 G from IMERYS Graphite and Carbon, with BET surface area of 780 $m^2/g$) and different modified lignins, in a planetary ball mill, Retsch PM 100 using $ZrO_2$ milling media. The dry ratio of the lignin and carbon was 1:1. The milled powder was then combined with 6 wt % of CMC/SBR (carboxymethylated cellulose/styrene butadiene rubber; ratio 1:2) binder system, and the resulting slurry was applied onto the current collector with 300 micro-meter wet thickness using film applicator (Sheen Instrument), dried at 80 °C for 1 hour and pressed using a Durston DRM 130 roller press. The pressed material was cut into strips and coin cell electrode formats.

***Electrochemical Characterization***

Electrochemical performance of the electrodes was studied using a computer-controlled potentiostat (SP200, BioLogic). The electrodes were evaluated by the cyclic voltammetry (CV) at different scan rates and the galvanostatic charge-discharge (GCD) by applying different charging rates (mass normalized current) in a three-electrode system under nitrogen atmosphere. The measurements were also carried out in ambient conditions. There are no significant changes in the electrochemical activity in both the atmospheres in the potential ranges used in the present study. A Pt mesh was used as a counter electrode, potential was measured versus the Ag/AgCl reference electrode, and the electrolyte was 0.1 M $HClO_4$. Specific energy (E) and specific power (P) were calculated using below formulas (V) and (VI):

$$E = \frac{1}{m}\int_0^t iV\,dt \qquad \text{(V)}$$

$$P = \frac{E}{t} \qquad \text{(VI)}$$

where m is total mass, t is discharge time, i is discharge current and V is the potential.

Modified lignin 2, 3, 4 and 6 were studied electrochemically in 0.1 M $HClO_4$ electrolyte in three electrode setups. Figures 2 a,b,c show the comparison of the CV, charge discharge at 0.1 A/g and 1 A/g respectively for the electrodes. Ragone plots of the samples are presented in Figure 2d. All the electrodes contain 1:1 composition of the modified lignin and the carbon black. The samples have similar electrochemical performance, although minor differences can be observed. The highest capacity 88 mAh/g is observed for 4 and modified lignin 3 shows plateau at lower potential compared to all other modifications as also seen by the broad peak in CV. Moreover, peak to peak distance is observed to be the maximum in 3. The chemical modification alters other properties that may be of importance for energy storage applications. Lignosulfonate is a water-soluble compound (>500g/L) with poor solubility in many organic solvents.

Modified lignin 10 and 11, prepared from fractionated lignin were also studied electrochemically in 0.1 M $HClO_4$ electrolyte in three electrode setups. Figues 3a and b show a comparison of the CV and discharge rate at 8 A/g, 1 A/g and 0.1 A/g respectively for the electrodes 10 and 11. The best performance, 103 mAh/g was observed, for the acetone insoluble Kraft lignin (AIKL) fraction. This result is unexpected as the charge capacity before chemical modification is higher for the aceton soluble Kraft lignin (ASKL) fraction compared to the AIKL 51 mAh/g and 35 mAh/g, respectively. The higher charge capacity for the ASKL compared to the AISK also correlates to the phenolic content according to NMR analysis. The ASKL comprises lignin with a lower average molecular weight and the phenol groups in ASKL is to a lesser extent part of the polymeric network and can therefore be available for electrochemical charge storage. However, the content of reactive aliphatic alcohols and hydrolysable ether bonds is higher for the AIKL compared to the ASKL and the AIKL can therefore couple more catechol units onto the lignin structure. The charge density of the AIKL was hence increase by a factor 2.9 to reach 106 mAh/g after the chemical modification and when mixed with 50% carbon black and binder.

Modified lignins 12, 13, 14, and 15 were prepared from hydrolysis lignin from soft wood and hard wood and the galvanstatic discharge curve for these materials is presented in Figure 3c. Charge capacity retention was recorded up to 2500 cycles in a three electrode configuration at 1 A/g in both acidic electrolyte comprising 0.1 M $HClO_4$ electrolyte and neutral electrolyte comprising saturated $NaClO_4$.

The 4-methoxyphenol, modified lignins and formaldehyde resin was evaluated electrochemically in a three-electrode set-up in 0.1 M $HClO_4$ electrolyte at 1 A/g (Figure 4a and 4b). The discharge capacity decreased from 63 mAh/g for modified lignin 4 to 18 - 43 mAh/g for the modified lignin formaldehyde resins. Without wishing to be bound by any particular theory, the poor capacity may be due to a high degree of cross-linking forming a more ridgid polymer structure that cannot easily make a strong interaction with the electrically conductive carbon phase.

Figure 5 shows (a) the CV (at 5 mV/s) for Kraft lignin fractionated in acetone along with the corresponding catechol modifications, (b) galvanostatic discharge plot of the Kraft lignin fractionated in acetone at different charge/-dishcarge rates, (c) and (d) are the galvanostatic discharge plot comparison for the Kraft lignin fractionated in acetone along with the corresponding catechol modifications at 0.1 and 1 A/g respectively.

Table 3 shows the comparison of the capacity, specific energy and specific power for different modified samples. Capacity value shows an increase of 29% after the catechol modification of the KL lignin at a charge discharge rate of 0.1 A/g. 32 % increase in specific energy can be observed by the catechol modification An increase in charge density from 35 mAh/g to 106 mAh/g for a lignin electrode with a 50% lignin content was recorded for a soft wood Kraft lignin that underwent a phenylation reaction with catechol after a fractionation procedure.

Table 3: Discharge capacity, Specific energy and specific power of the modified lignins.

| ID | Charge/Discharge rate (A/g) | Discharge capacity (mAh/g) | Sp.Energy (Wh/kg) | Sp. Power (W/kg) |
|---|---|---|---|---|
| 1 | 0.1 | 63.1 | 34 | 54 |
| | 1 | 41.9 | 22.3 | 531 |
| | 4 | 30.7 | 14.1 | 1831 |
| 2 | 0.1 | 81.1 | 44.8 | 55 |
| | 1 | 60.9 | 32.7 | 538 |
| | 4 | 48.1 | 22.8 | 1894 |
| 3 | 0.1 | 77 | 40.4 | 53 |
| | 1 | 63.8 | 30.9 | 485 |
| | 4 | 44.4 | 16.7 | 1507 |
| 4 | 0.1 | 88.1 | 49 | 56 |
| | 1 | 62 | 32.4 | 523 |
| | 4 | 36.5 | 14.8 | 1628 |
| 6 | 0.1 | 86.6 | 44.1 | 51 |
| | 1 | 66.4 | 33.9 | 511 |
| | 4 | 45.1 | 19.2 | 1698 |
| 8 | 0.1 | 34.5 | 17.6 | 51 |
| | 1 | 24.6 | 12 | 487 |
| | 4 | 15.8 | 5.9 | 1510 |
| 9 | 0.1 | 51.7 | 27.6 | 53 |
| | 1 | 17.5 | 6.3 | 358 |
| | 4 | 0.2 | 0.01 | 335 |
| 10 | 0.1 | 97.8 | 48.2 | 49 |
| | 1 | 50.6 | 22.4 | 443 |
| | 4 | 4.2 | 0.8 | 765 |
| 11 | 0.1 | 105.6 | 51.4 | 49 |
| | 1 | 66.1 | 33.8 | 512 |
| | 4 | 42.3 | 18 | 1703 |
| 12 | 0.1 | 47.7 | 25.4 | 53 |
| | 1 | 35.5 | 18.2 | 512 |
| | 4 | 21.8 | 8.7 | 1589 |
| 13 | 0.1 | 81.1 | 41.6 | 51 |
| | 1 | 56.9 | 28.4 | 499 |
| | 4 | 35.7 | 15.3 | 1719 |
| 14 | 0.25 | 48.1 | 26.8 | 140 |
| | 1 | 40.3 | 21.3 | 533 |
| | 4 | 24.1 | 9.3 | 1555 |
| 15 | 0.1 | 74.6 | 34.2 | 46 |
| | 1 | 14.2 | 2.9 | 205 |
| | 4 | 0.008 | 0.0017 | 810 |

(continued)

| ID | Charge/Discharge rate (A/g) | Discharge capacity (mAh/g) | Sp.Energy (Wh/kg) | Sp. Power (W/kg) |
|---|---|---|---|---|
| 16 | 0.1 | 58.3 | 26.9 | 46 |
| | 1 | 42.7 | 17.2 | 469 |
| | 4 | 32.3 | 12.8 | 1577 |
| 17 | 0.1 | 62.4 | 30.4 | 49 |
| | 1 | 47.7 | 22.6 | 473 |
| | 4 | 35.1 | 14.2 | 1610 |
| 18 | 0.1 | 48.3 | 22.2 | 46 |
| | 1 | 24.7 | 10.3 | 415 |
| | 4 | 4.2 | 0.7 | 665 |
| 19 | 0.1 | 70.5 | 31.2 | 44 |
| | 1 | 46.03 | 21.4 | 464 |
| | 4 | 32.8 | 12.8 | 1559 |
| 20 | 0.1 | 20.3 | 8.6 | 42 |
| | 1 | 16.1 | 6.7 | 416 |
| | 4 | 12.8 | 4.5 | 1406 |

In summary, several modified lignin were prepared from different sources of lignin and catechols, and some of these were characterized using chemical and electrochemical characterization methods. The chemical characterization shows evidence of a successful conversion of lignin to modified lignin. The electrochemical characterization shows that the increased catechol content in modified lignincompared to lignin, resulted in increased charge density of electrode materials. An increase in charge density from 35 mAh/g to 106 mAh/g for a lignin electrode with a 50% lignin content was recorded for a soft wood Kraft lignin that underwent a phenylation reaction with catechol after a fractionation procedure. Similar boost in increased charge density was observed for other lignins including lignosulfonate reaching a discharge capacity of 87 mAh/g, despite an expected lower reactivity.

It is concluded that the inventive electrode material, with the increased amount of phenolic hydroxyl groups, exhibit improved electrical properties as compared to the unmodified lignin counterparts.

## Claims

1. An electrode material for use in an electrochemical storage device, comprising a modified lignin being a lignin functionalized with at least one aromatic moiety selected from the list of catechol, hydroquinone, and phenols substituted with an alkoxy group, wherein a total content of phenolic hydroxyl groups in the modified lignin is at least 4.0 mmol/g, as determined by $^{31}$P Nuclear Magnetic Resonance Spectroscopy.

2. The electrode material according to claim 1, wherein the lignin is selected from the group consisting of Kraft lignin, fractioned Kraft lignin, lignosulfonate, hydrolysis lignin, soda lignin, and organosolv lignin.

3. The electrode material according to claim 1 or 2, wherein the lignin is lignosulfonate.

4. The electrode material according to claim 1 or 2, wherein the lignin is Kraft lignin.

5. The electrode material according to any one of claim 1-4, wherein each alkyl group of the alkoxy group has a molecular weight of lower than 225 g/mol, as determined by $^{31}$P Nuclear Magnetic Resonance Spectroscopy.

6. The electrode material according to any one of the preceding claims, wherein the modified lignin has an aliphatic alcohol content of lower than 0.2 mmol/g, such as lower than 0.1 mmol/g, as determined by $^{31}$P Nuclear Magnetic Resonance Spectroscopy.

7. The electrode material according to any one of the preceding claims, wherein the modified lignin is present in a resin.

8. A method for preparing an electrode material comprising the steps of:

- providing a lignin source selected from Kraft lignin, fractioned Kraft lignin, lignosulfonate, hydrolysis lignin, soda lignin, and organosolv lignin;
- providing a reactant selected from the group consisting of catechol, hydroquinone, and phenols substituted with an alkoxy group;
- combining the lignin source and the reactant to form a mixture;
- reacting the mixture at an elevated temperature for a predetermined time in the presence of a strong acid;
- precipitating a modified lignin;
- preparing an electrode material comprising the modified lignin.

9. The method according to claim 8, where the step of preparing an electrode material further comprises combining the modified lignin with a formaldehyde or paraformaldehyde and 4-methoxyphenol to form a second mixture, and reacting the second mixture to form a resin comprising the modified lignin, formaldehyde or paraformaldehyde, and 4-methoxyphenol.

10. The method according to claim 9, wherein combining the modified lignin with a formaldehyde or paraformaldehyde and 4-methoxyphenol to form a second mixture comprises heating said second mixture to a temperature of 60-120 °C, such as 70-110 °C for a second predetermined time.

11. The method according to any one of claims 8-10, the step of preparing an electrode material comprising the modified lignin, further comprises a sub-step of mechanically milling the modified lignin and a conductive carbon material.

12. The method according to any one of claim 8-11, wherein the lignin is lignosulfonate.

13. The method according to any one of claim 8-12, wherein the lignin is Kraft lignin.

14. An energy storage device comprising a cathode, an anode and an electrolyte disposed between the cathode and the anode, wherein the cathode comprises the electrode material according to any one of claims 1-7.

15. The energy storage device according to claim 14, wherein the electrolyte is a water-based electrolyte provided as a hydrogel.

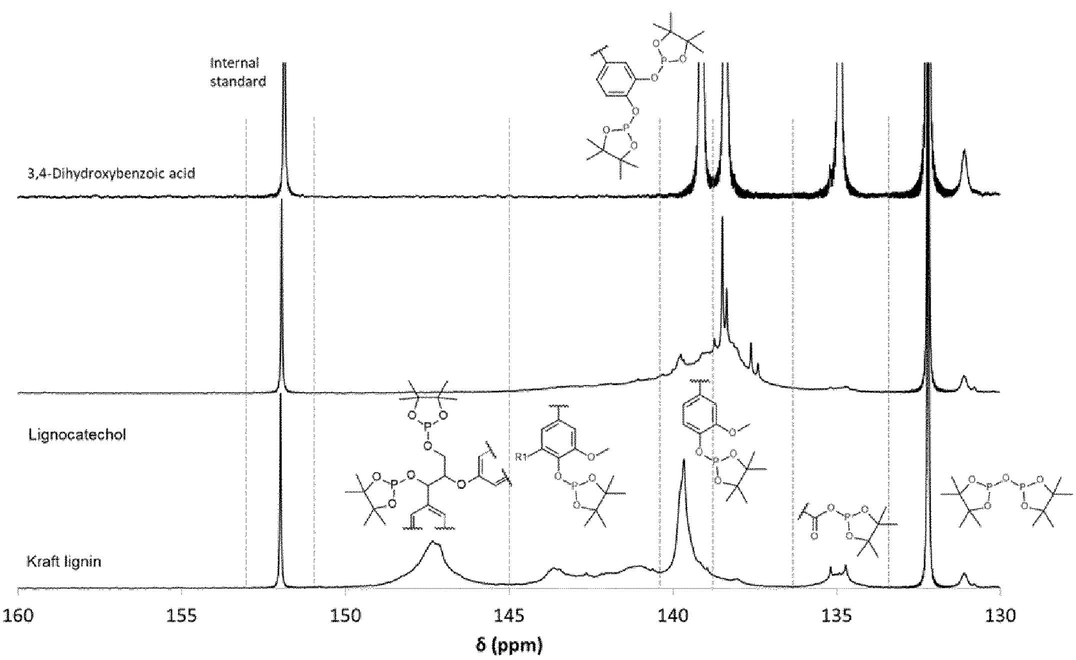
Internal
standard
3,4-Dihydroxybenzoic acid
Lignocatechol
Kraft lignin
R1
160
155
150
145
140
135
130
δ (ppm)

*Fig. 1*

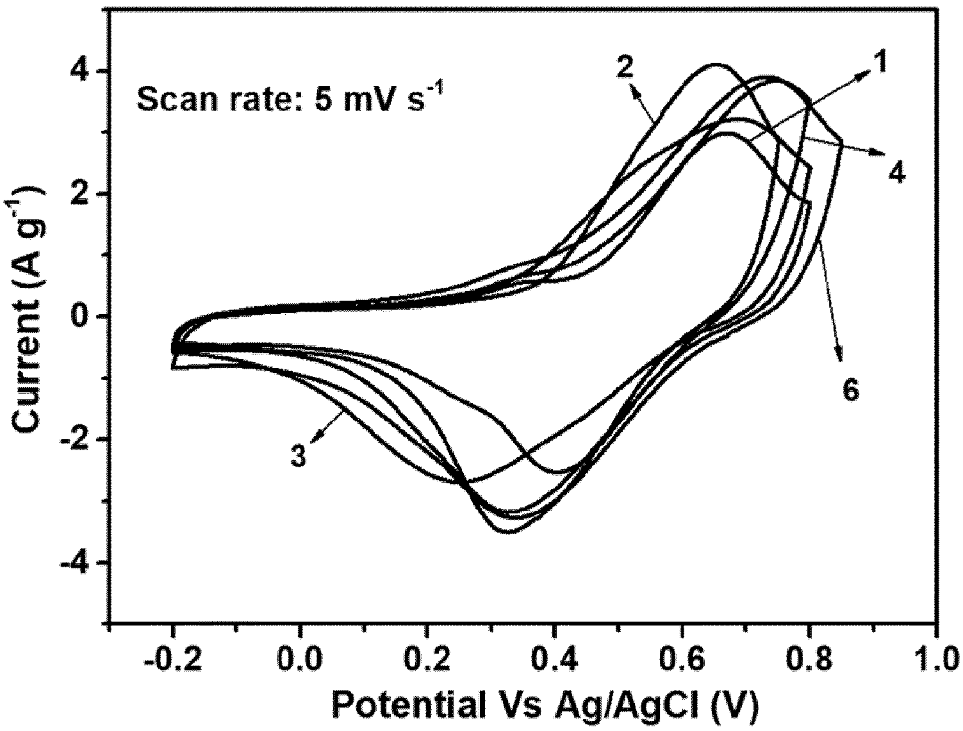
Scan rate: 5 mV s-1
Current (A g-1)
Potential Vs Ag/AgCl (V)
1
2
3
4
6
4
2
0
-2
-4
-0.2
0.0
0.2
0.4
0.6
0.8
1.0

*Fig. 2a*

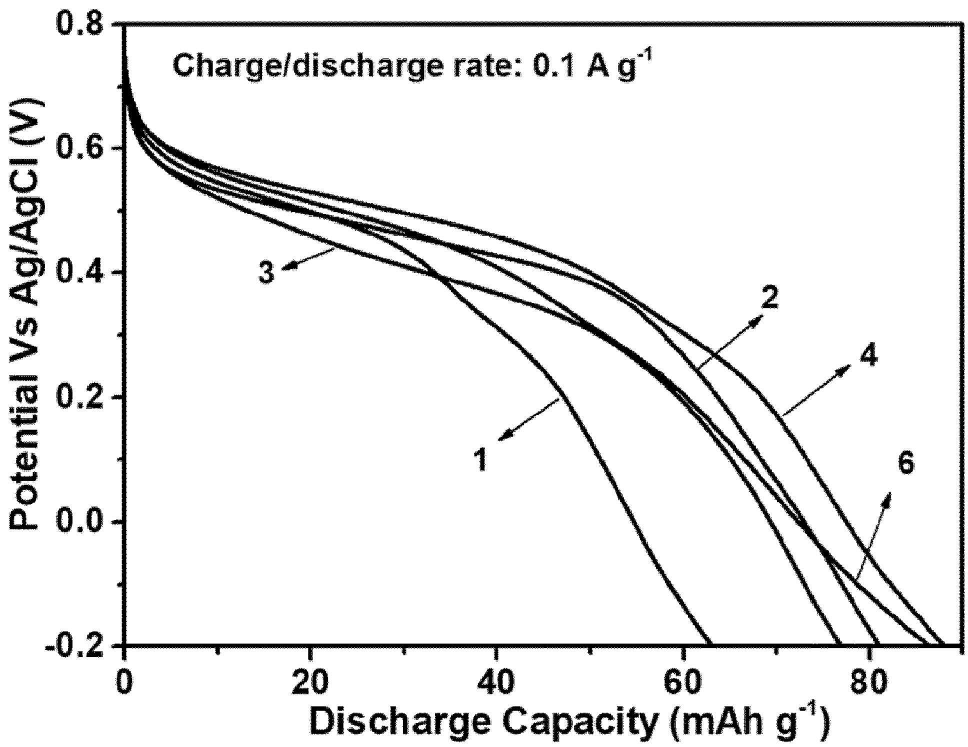
Charge/discharge rate: 0.1 A g-1
Potential Vs Ag/AgCl (V)
Discharge Capacity (mAh g-1)
1
2
3
4
6
0.8
0.6
0.4
0.2
0.0
-0.2
0
20
40
60
80

*Fig. 2b*

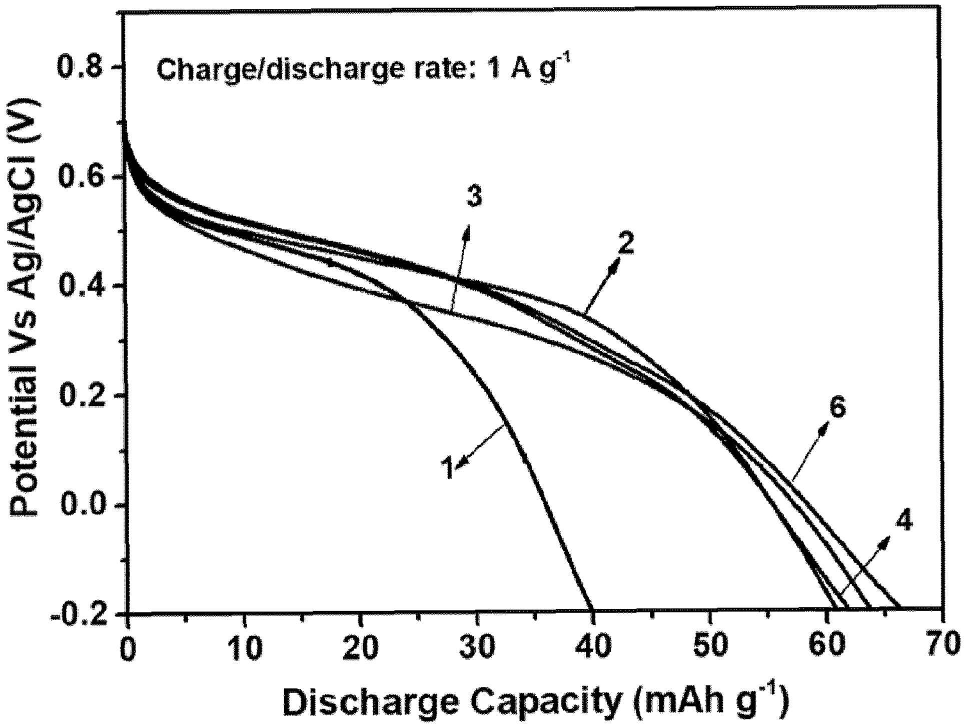
Charge/discharge rate: 1 A g-1
Potential Vs Ag/AgCl (V)
Discharge Capacity (mAh g-1)
0.8
0.6
0.4
0.2
0.0
-0.2
0
10
20
30
40
50
60
70
1
2
3
4
6

*Fig. 2c*

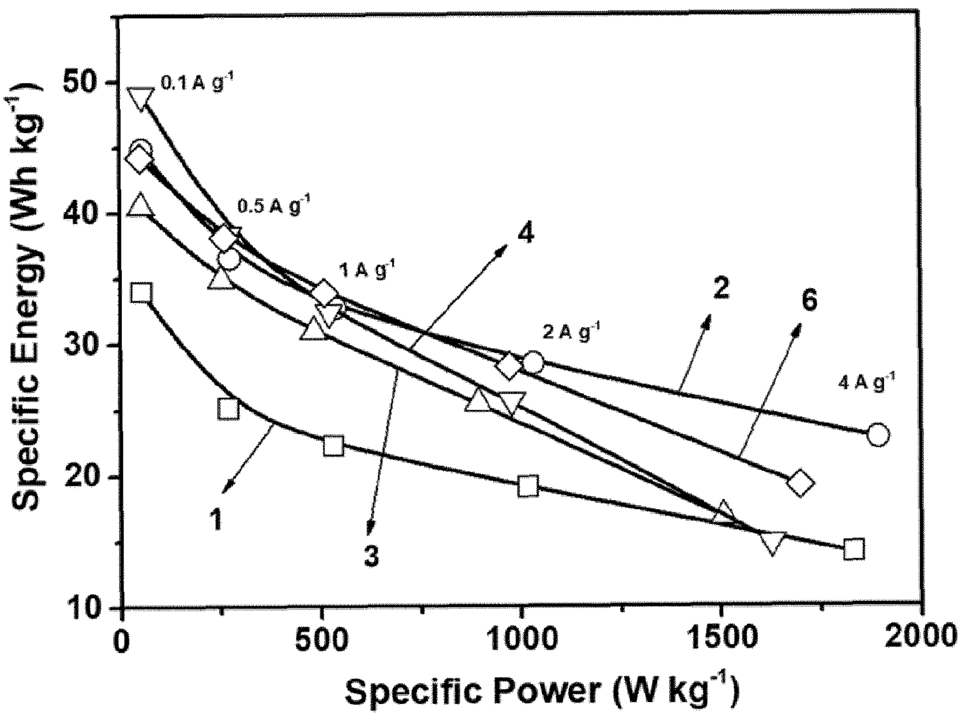
Specific Energy (Wh kg-1)
Specific Power (W kg-1)
0.1 A g-1
0.5 A g-1
1 A g-1
2 A g-1
4 A g-1
50
40
30
20
10
0
500
1000
1500
2000
1
2
3
4
6

*Fig. 2d*

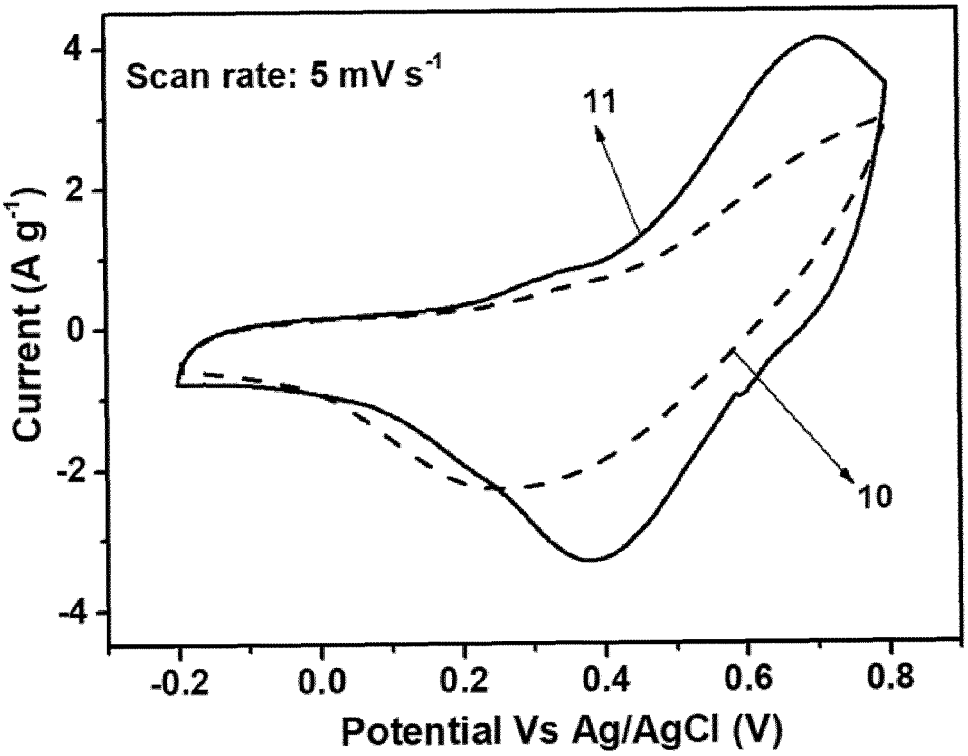
Scan rate: 5 mV s-1
11
10
Current (A g-1)
Potential Vs Ag/AgCl (V)
4
2
0
-2
-4
-0.2
0.0
0.2
0.4
0.6
0.8

*Fig. 3a*

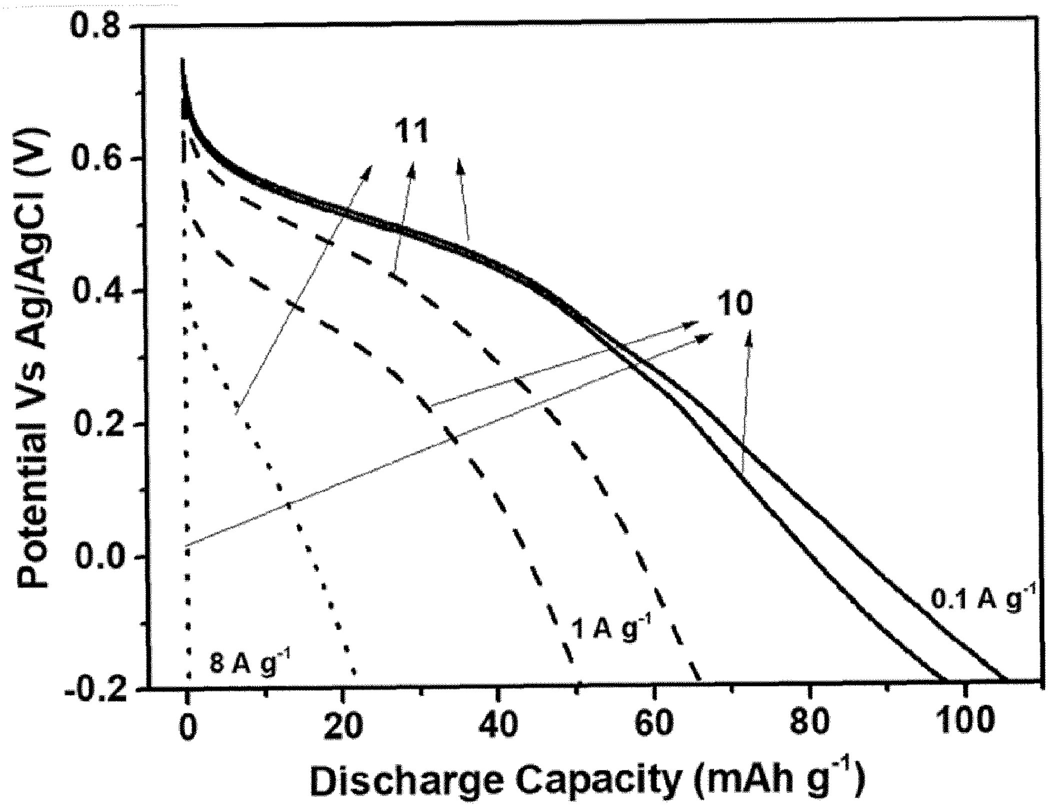
11
10
0.1 A g-1
1 A g-1
8 A g-1
Potential Vs Ag/AgCl (V)
Discharge Capacity (mAh g-1)
0.8
0.6
0.4
0.2
0.0
-0.2
0
20
40
60
80
100

*Fig. 3b*

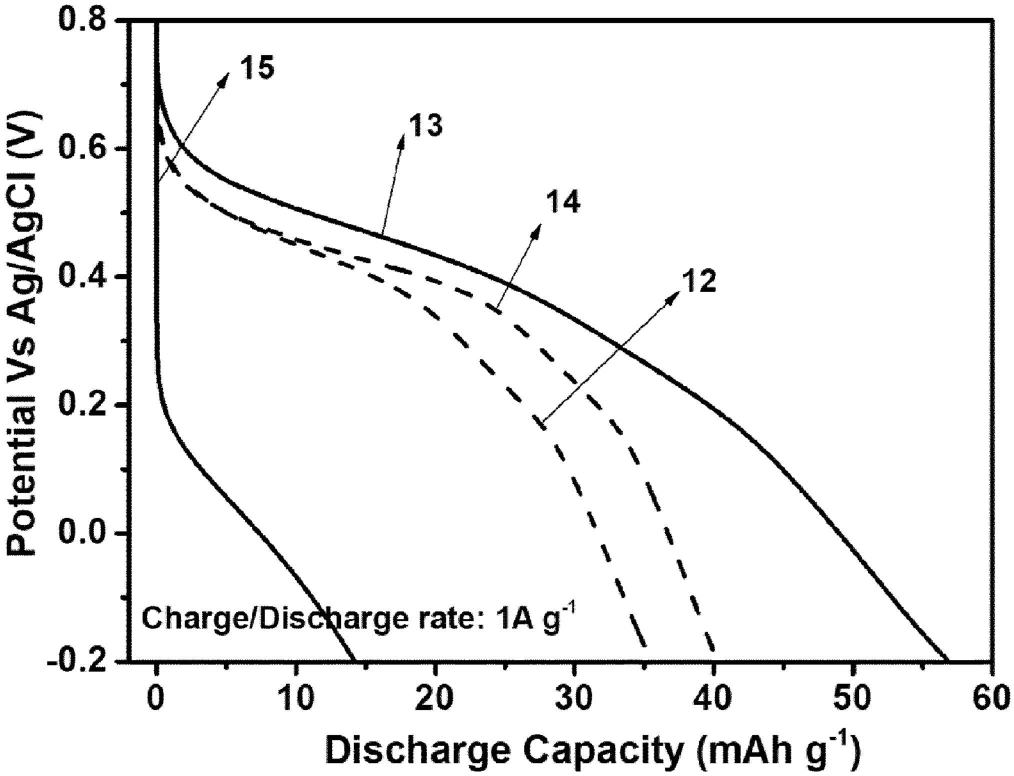
0.8
0.6
0.4
0.2
0.0
-0.2
Potential Vs Ag/AgCl (V)
15
13
14
12
Charge/Discharge rate: 1A g-1
0
10
20
30
40
50
60
Discharge Capacity (mAh g-1)

*Fig. 3c*

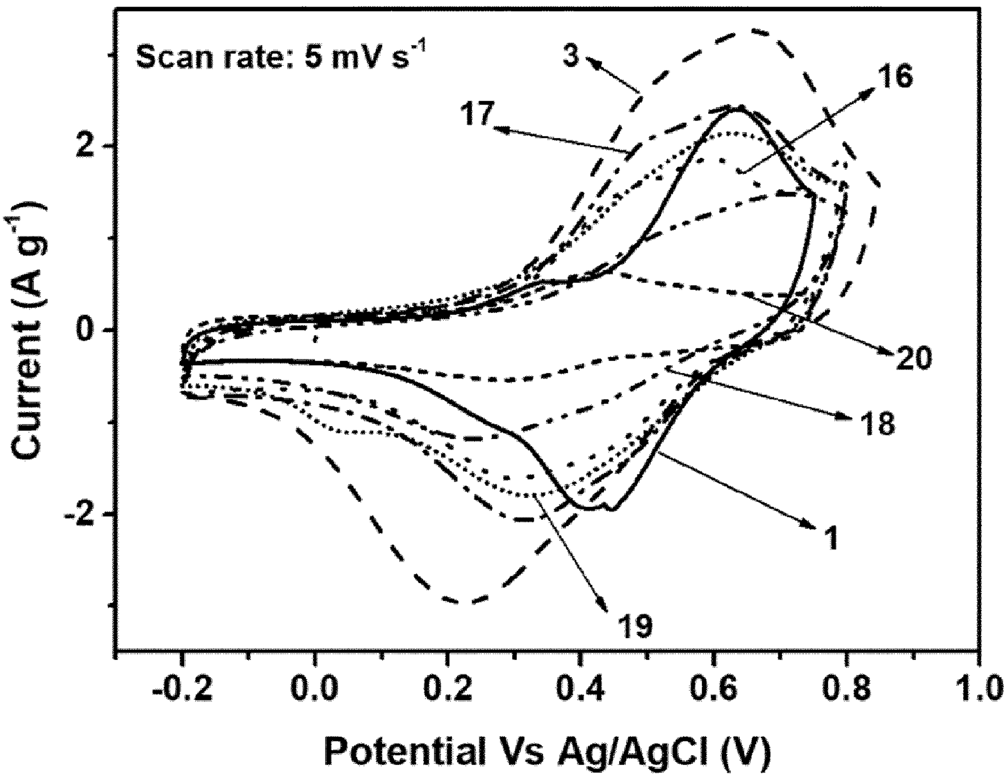
Scan rate: 5 mV s-1
3
16
17
2
0
-2
Current (A g-1)
20
18
1
19
-0.2
0.0
0.2
0.4
0.6
0.8
1.0
Potential Vs Ag/AgCl (V)

*Fig. 4a*

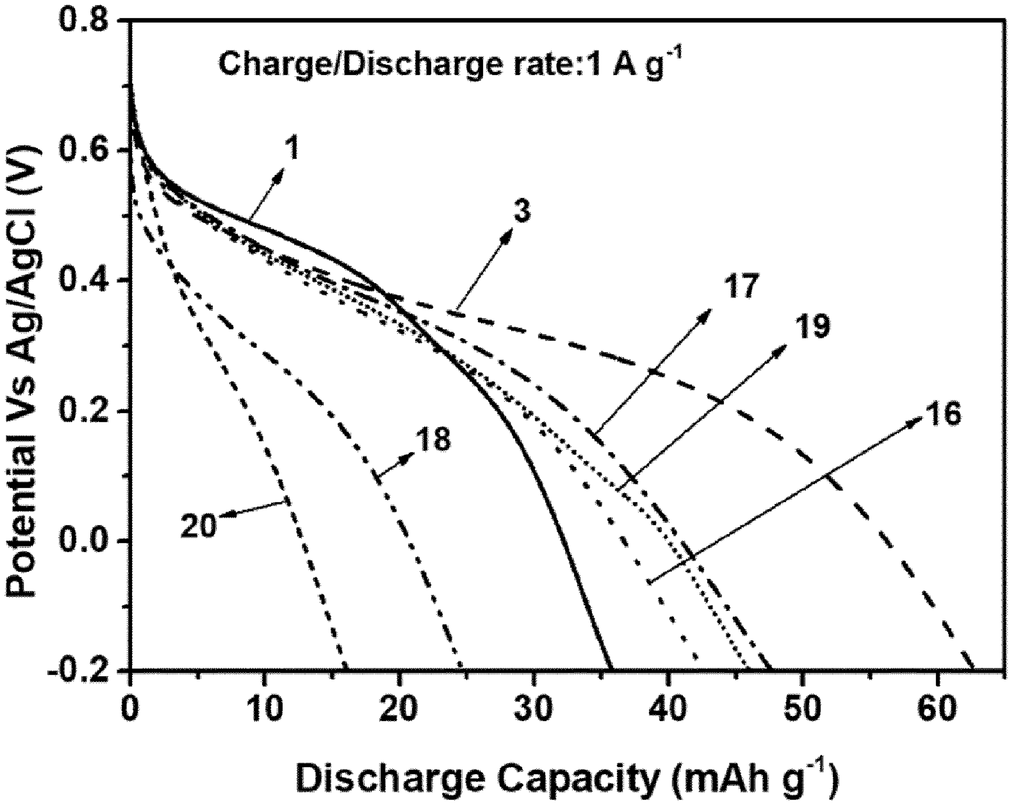
Charge/Discharge rate:1 A g-1
Potential Vs Ag/AgCl (V)
Discharge Capacity (mAh g-1)
1
3
17
19
16
18
20
0.8
0.6
0.4
0.2
0.0
-0.2
0
10
20
30
40
50
60

*Fig. 4b*

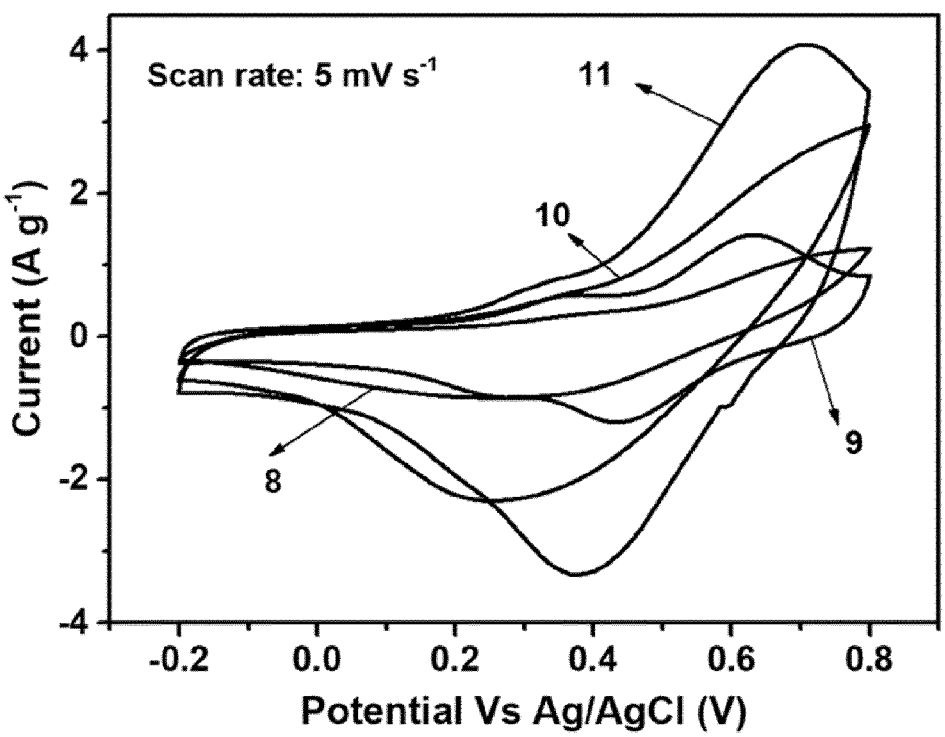
Scan rate: 5 mV s-1
Current (A g-1)
Potential Vs Ag/AgCl (V)
11
10
8
9
4
2
0
-2
-4
-0.2
0.0
0.2
0.4
0.6
0.8

*Fig. 5a*

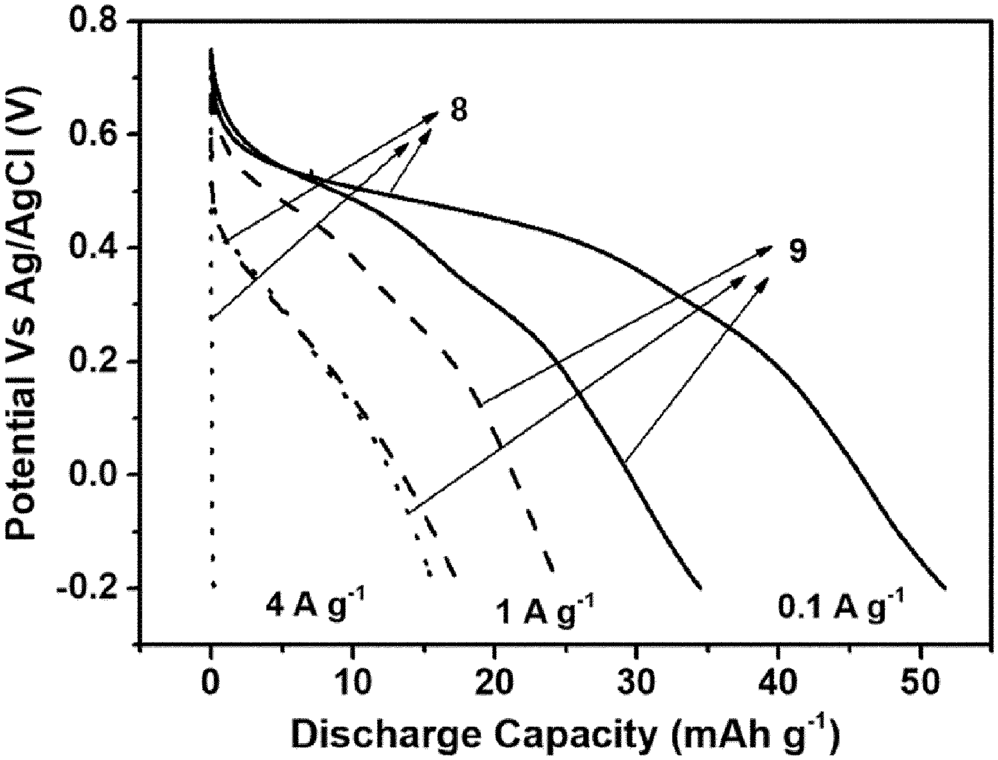
0.8
0.6
0.4
0.2
0.0
-0.2
Potential Vs Ag/AgCl (V)
8
9
4 A g-1
1 A g-1
0.1 A g-1
0
10
20
30
40
50
Discharge Capacity (mAh g-1)

*Fig. 5b*

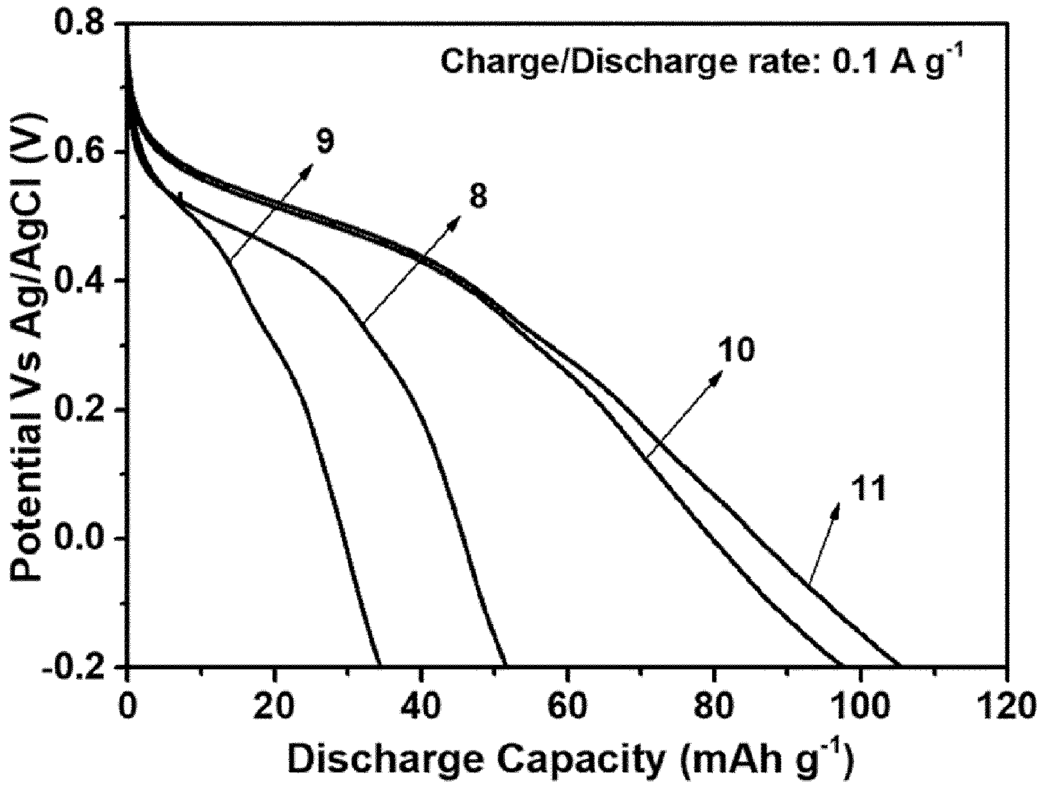
0.8
0.6
0.4
0.2
0.0
-0.2
Potential Vs Ag/AgCl (V)
Charge/Discharge rate: 0.1 A g-1
9
8
10
11
0
20
40
60
80
100
120
Discharge Capacity (mAh g-1)

*Fig. 5c*

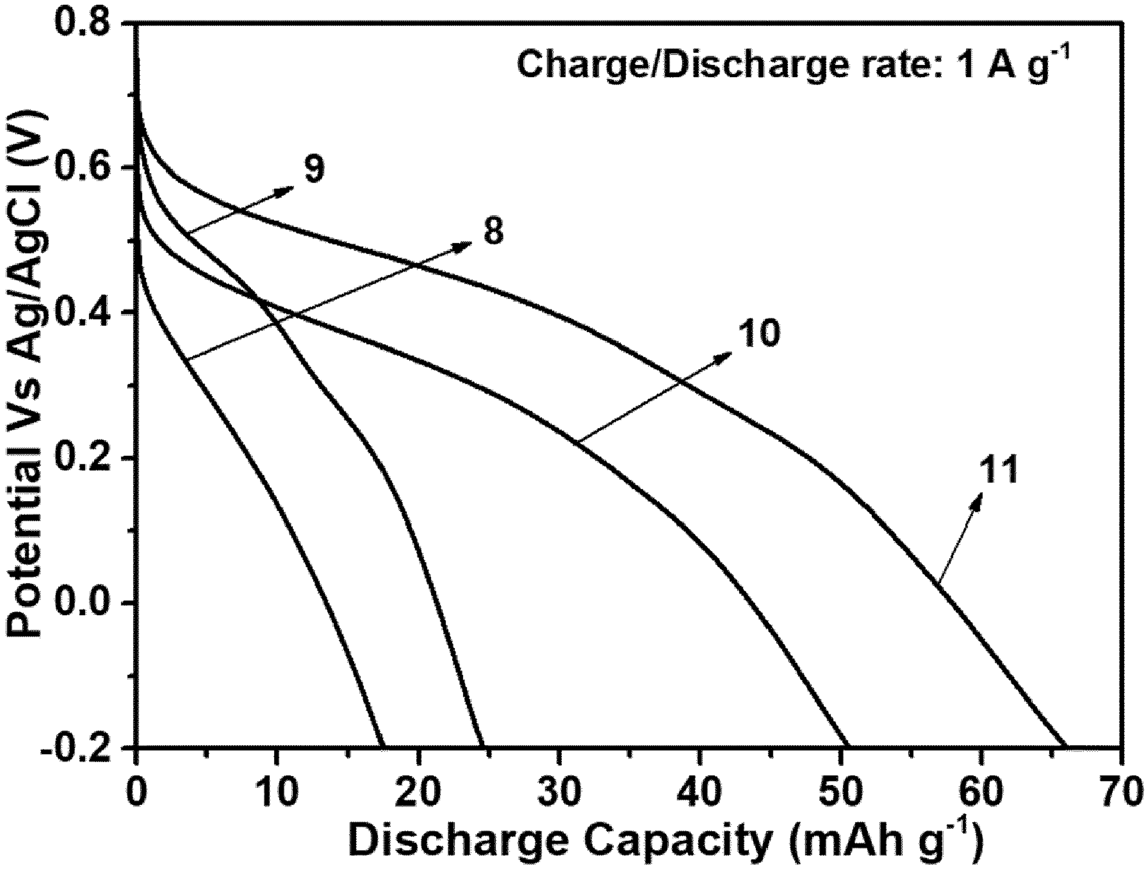
Charge/Discharge rate: 1 A g-1
Potential Vs Ag/AgCl (V)
Discharge Capacity (mAh g-1)
0.8
0.6
0.4
0.2
0.0
-0.2
0
10
20
30
40
50
60
70
9
8
10
11

*Fig. 5d*

Europäisches Patentamt
European Patent Office
Office européen des brevets

# EUROPEAN SEARCH REPORT

Application Number
EP 23 18 0636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 691 000 A1 (LIGNA ENERGY AB [SE]) 5 August 2020 (2020-08-05) * paragraph [0003] - paragraph [0030]; claims 1-13 * | 1-15 | INV. H01G11/48 H01G11/86 H01M4/137 H01M4/1399 H01M4/90 ADD. H01G11/44 |
| A | CN 106 698 389 A (UNIV SOUTH CHINA TECH) 24 May 2017 (2017-05-24) * paragraph [0009] - paragraph [0054]; claims 1-9; figure 1 * | 1-15 | |
| A | CN 110 676 066 B (UNIV NORTHEAST FORESTRY) 9 July 2021 (2021-07-09) * Abstract; paragraph [0007] - paragraph [0026] * | 1-15 | |
| A | US 2008/017832 A1 (FUNAOKA MASAMITSU [JP] ET AL) 24 January 2008 (2008-01-24) * paragraph [0051] - paragraph [0106] * | 1-15 | |
| A | ESPINOZA-ACOSTA JOSÉ LUIS ET AL: "Lignin in storage and renewable energy applications: A review", JOURNAL OF ENERGY CHEMISTRY, ELSEVIER, AMSTERDAM, NL, vol. 27, no. 5, 2 March 2018 (2018-03-02), pages 1422-1438, XP085460802, ISSN: 2095-4956, DOI: 10.1016/J.JECHEM.2018.02.015 * page 1423, paragraph 2. Background of lignin - page 1425; figures 1,2,3; table 1 * * page 1428, paragraph 3.3 Lithium ion batteries - page 1434; figures 7,8,9,10,11,12; tables 2,3 * | 1-15 | TECHNICAL FIELDS SEARCHED (IPC) H01G H01M |

1

The present search report has been drawn up for all claims

| Place of search | Date of completion of the search | Examiner |
|---|---|---|
| Munich | 21 December 2023 | Frias Rebelo, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 18 0636

This annex lists the patent family members relating to the patent documents cited in the above-mentioned European search report. The members are as contained in the European Patent Office EDP file on
The European Patent Office is in no way liable for these particulars which are merely given for the purpose of information.

21-12-2023

| Patent document cited in search report | | Publication date | Patent family member(s) | | Publication date |
|---|---|---|---|---|---|
| EP 3691000 | A1 | 05-08-2020 | NONE | | |
| CN 106698389 | A | 24-05-2017 | NONE | | |
| CN 110676066 | B | 09-07-2021 | NONE | | |
| US 2008017832 | A1 | 24-01-2008 | JP 4785732 | B2 | 05-10-2011 |
| | | | JP WO2005085355 | A1 | 24-01-2008 |
| | | | US 2008017832 | A1 | 24-01-2008 |
| | | | WO 2005085355 | A1 | 15-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 19155073
- EP 3691000 A1


### Non-patent literature cited in the description


- **A. GRANATA** ; **D. S. ARGYROPOULOS**. *J. Agric. Food Chem.*, 1995, vol. 43, 1538-1544